# FASCICULE DE BREVET EUROPEEN

(11) **EP 1 440 616 B1**
(45) Date de publication et mention de la délivrance du brevet: **23.05.2007**
(21) Numéro de dépôt: 04405045.8
(22) Date de dépôt: 23.01.2004
(51) Int. Cl.: A01C 7/12

(54) **Dispositif pour le dosage sélectif de graines et d'additifs destinés à ensemencer et à amender les sols**
Vorrichtung zum wahlweisen Dosieren von Körnern und Zutaten, die für das Säen und das Verbessern des Bodens vorgesehen sind
Device for selectively metering grain and additives intended for sowing and for improving the soil

(30) Priorité: 27.01.2003 FR 0300881
(43) Date de publication de la demande: 28.07.2004
(73) Titulaire: Hechter Services S.A., 1207 Genève (CH)
(72) Inventeur: Soun, Jean-Yves, 30220 Saint Laurent D'Aigouze (FR)
(74) Mandataire: Moinas, Michel

(56) Documents cités:
- EP-A- 0 094 583
- DE-A- 19 815 198
- DE-C- 48 124
- DE-C- 139 528
- FR-A- 900 752
- US-A- 1 573 493
- US-A- 2 042 133

## Description

L'invention concerne un dispositif pour le dosage sélectif de graines destinées essentiellement à ensemencer et/ou à regarnir des sols et d'additifs destinés essentiellement à amender (fertilisants) et/ou à traiter (pesticides) les sols.

Les domaines concernés par le dispositif selon l'invention sont :
- le semis qui est une opération entreprise après une préparation du sol (labour ou autre) ;
- le resemis, ou semis direct, qui est une opération entreprise pour compenser, soit une mortalité naturelle du tapis végétal, soit une mortalité provoquée par un traitement herbicide de contact, sans préparation du sol ;
- le regarnissage qui est une opération qui consiste à incorporer dans un gazon existant, de nouvelles graminées ;
- l'amendement ou le traitement du sol par l'apport d'additifs bien spécifiques.

Les utilisateurs potentiels du dispositif selon l'invention sont
- les prestataires de services tels les paysagistes, les régénérateurs de sols sportifs engazonnés, les loueurs de matériels ;
- les exploitants de golfs et d'hippodromes ;
- les services d'entretien des espaces verts des communes ;
- les semenciers et les coopératives pour l'engazonnement de vignes et de vergers.

Les objectifs auxquels se propose de répondre le dispositif selon l'invention sont :
- réunir dans le même dispositif les moyens liés aux opérations de semis, de resemis, de regarnissage, d'amendement et de traitement des sols par des additifs granuleux, pulvérulents voire liquides par pulvérisation ;
- disposer d'un ensemble capable de s'adapter aussi bien à un green de golf (terrain souple et très délicat) qu'à un hippodrome (surface importante plus rustique et tondue à une hauteur de 8 à 10 cm)
- obtenir un dispositif facilement et rapidement manoeuvrable, ayant peu de friction par rapport au sol, utilisable sur des surfaces comportant des obstacles (arroseurs, pierres et autres), modulable en fonction de la largeur de travail (par exemple de 70 cm à 3,50 mètres) par la juxtaposition de modules de base, ayant peu d'usure, utilisable par tout type de temps.

Les modules de base constitutifs du dispositif selon l'invention sont :
- un réservoir destiné à contenir les graines ou les additifs ;
- une unité pour le dosage sélectif des graines ou des additifs en provenance dudit réservoir ;
- des moyens pour le transfert des graines ou des additifs en provenance de ladite unité de dosage, dans des sillons réalisés dans le sol au moyen d'une unité de scarification pourvue d'une pluralité de disques.
lis se caractérisent essentiellement en ce que l'unité de dosage sélectif des graines et des additifs en provenance du réservoir, comporte en combinaison :
a) un rouleau de dosage sélectif comportant, longitudinalement, une pluralité de zones successives subdivisées, chacune, en au moins deux zones pourvues de moyens adaptés pour doser les graines ou les additifs en fonction de leur granulométrie ;
b) un premier moyen comportant une pluralité d'ouvertures, séparées par des parties pleines, adaptées pour faire communiquer, par le déplacement latéral dudit moyen, les graines ou additifs en provenance du réservoir, soit avec la première zone, soit avec la deuxième zone ;
c) un deuxième moyen comportant une pluralité d'ouvertures, séparées par des parties pleines, adaptées pour obturer plus ou moins, par le déplacement latéral dudit deuxième moyen, les ouvertures du premier moyen.
Ils se caractérisent également en ce que les moyens pour le transfert des graines ou des additifs en provenance de l'unité de dosage, dans les sillons réalisés dans le sol par l'unité de scarification, sont constitués d'un entonnoir pourvu d'une canalisation reliée à un doigt semeur creux.

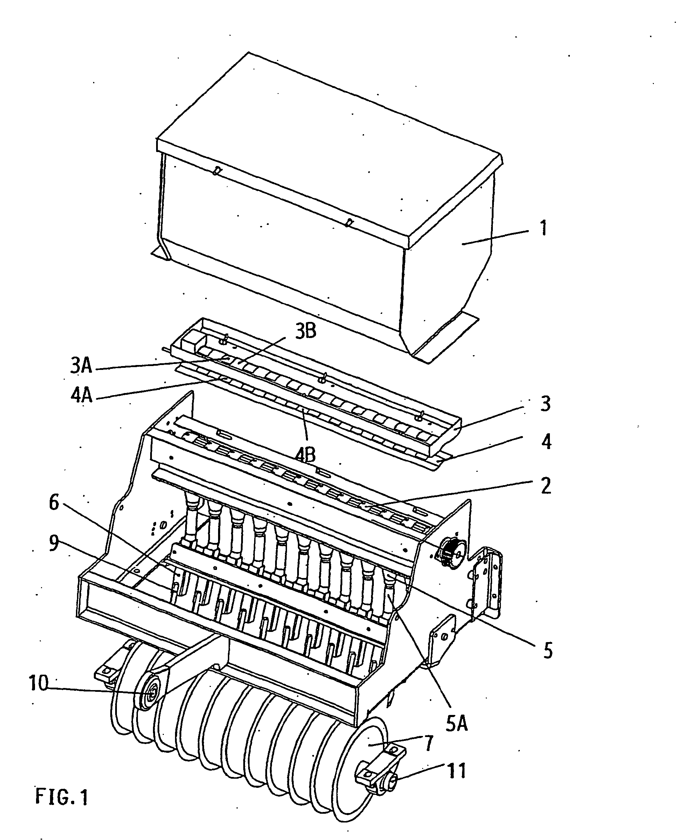

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.
Sur ces dessins
- la Figure 1 est une vue éclatée, en perspective, des divers sous-ensembles du dispositif selon l'invention ;

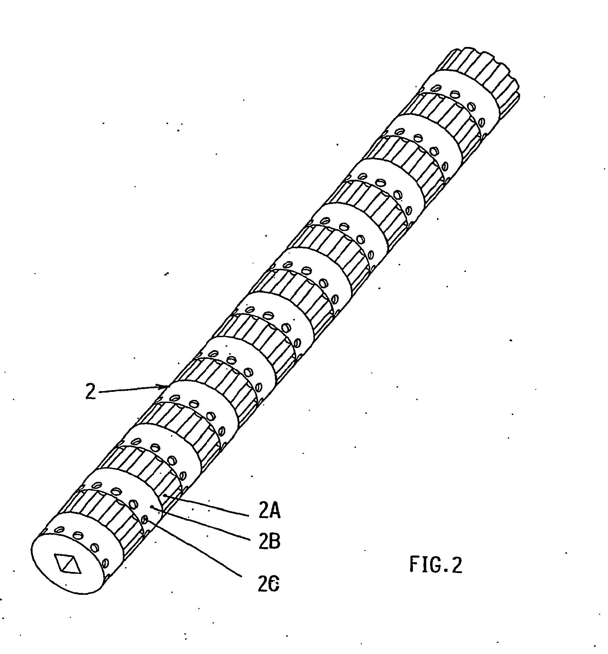

- la Figure 2 est une vue de détail, en perspective, du rouleau de distribution ;

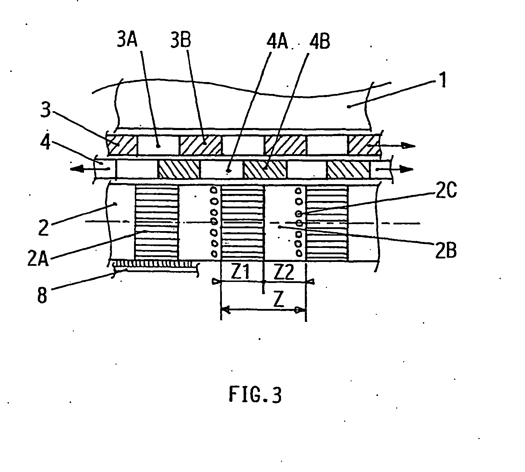

- la Figure 3 est une vue partielle, en coupe longitudinale, des premier et deuxième moyens précédents associés au rouleau distributeur et à l'entonnoir de récupération.

Le dispositif pour le dosage sélectif de graines et d'additifs, représenté aux figures, comprend essentiellement :
a) un réservoir (1) destiné à contenir lesdites graines ou lesdits additifs ;
b) une unité pour le dosage sélectif (2,3,4) des graines ou des additifs en provenance dudit réservoir ;
c) des moyens (5,6) pour le transfert des graines ou des additifs en provenance de ladite unité de dosage, dans des sillons réalisés dans le sol au moyen d'une unité de scarification pourvue d'une pluralité de disques (7) ;
L'unité de dosage sélectif des graines et des additifs en provenance du réservoir, comporte en combinaison :
a) un rouleau de dosage sélectif (2) comportant, longitudinalement, une pluralité de zones successives (Z) subdivisées, chacune, en au moins deux zones (Z1) et (Z2) pourvues de moyens (2A), (2B) et (2C) adaptés pour doser les graines ou les additifs en fonction de leur granulométrie ;
b) un moyen (3) comportant une pluralité d'ouvertures (3A), séparées par des parties pleines (3B), adaptées pour faire communiquer, par le déplacement latéral dudit moyen (3), les graines ou additifs en provenance du réservoir (1), soit avec la zone (Z1), soit avec la zone (Z2) ;
c) un moyen (4) comportant une pluralité d'ouvertures (4A), séparées par des parties pleines (4B), adaptées pour obturer plus ou moins, par le déplacement latéral dudit moyen (4), les ouvertures (3A) du moyen (3).
Selon des particularités de réalisation du rouleau (2) :
- le moyen (2A) est constitué de cannelures axiales (2A) disposées à la périphérie de toute la largeur de la zone (Z1) : elles sont destinées à véhiculer des graines de grosses dimensions (granulométrie de l'ordre de 500 à 700 graines par gramme) et à obtenir un dosage pouvant atteindre 50 g/m² pour des graines et 120 g/m² pour des fertilisants ou des amendements enrobés ;
- le moyen (2B) est constitué de la paroi externe lisse, du rouleau (2), qui occupe une partie de la largeur de la zone (Z2) et en ce qu'au moins la partie dudit rouleau concernée par ladite paroi est réalisée en un matériau diélectrique chargé en particules électriques statiques par le frottement, pendant la rotation du rouleau (2), d'un moyen (8), de type balai brosse : elle est destinée à véhiculer, par effet électrostatique, des graines fines (granulométrie de l'ordre de 18 000 à 23 000 graines par gramme) et à obtenir un dosage minimum de l'ordre de 0,25 g/m²;
- le moyen (2C) est constitué de lamages réalisés à la périphérie de la partie de la largeur de la zone (Z2) non occupée par le moyen (2B) : elle est destinée à véhiculer des graines moyennes et rondes (granulométrie de l'ordre de 2 500 graines par gramme).
Les moyens pour le transfert des graines ou des additifs en provenance de l'unité de dosage, dans les sillons réalisés dans le sol par l'unité de scarification, sont constitués d'un entonnoir (5) pourvu d'une canalisation (5A), de préférence souple et transparente, reliée à un doigt semeur creux (6).
Chaque doigt semeur creux (6) comporte
- un prolongateur creux coulissant dont la course est adaptée pour permettre à son extrémité basse de transférer les graines ou les additifs au plus près des sillons ;
- un bras (9) adaptée pour écarter le gazon de chaque côté des sillons ;
- des tubes capillaires, coulissants, adaptés pour transférer des additifs liquides au plus près des sillons.
Les tubes capillaires sont alimentés par des électrovannes asservies par un calculateur de débit.
La vitesse de rotation du rouleau distributeur (2) est asservie à la vitesse d'avancement de l'engin porteur et tracteur de l'ensemble des éléments constitutifs du dispositif de dosage. La distribution est dite « forcée » et est proportionnelle à la vitesse d'avancement.
L'ensemble des éléments constitutifs du dispositif de dosage est relié à l'engin porteur et tracteur au moyen d'une suspension hydropneumatique. Le dispositif en question comporte également :
- un bras de liaison (10) aux points d'attelage ;
- un axe (11), porteur des disques (7) du scarificateur, entraînant le rouleau (2).
Un même engin pourra porter, et donc tracter, plusieurs dispositifs selon l'invention de manière à couvrir une surface multiple.
Par exemple, pour un module de base de largeur de 70 cm, un porte outils adapté pour supporter jusqu'à 5 modules, pourra couvrir une largeur de 3,50 m.

Bien entendu l'invention n'est pas limitée aux modes de réalisation décrits et représentés pour lesquels on pourra prévoir d'autres variantes, en particulier dans la conception, le nombre et les dimensions des ouvertures des moyens (3) et (4), des moyens de tri et de dosage (2A), (2B) et (2C), des moyens de transfert (6,7) ; elle peut être étendue à d'autres applications.

## Revendications

1. Dispositif pour le dosage sélectif de graines destinées essentiellement à ensemencer et/ou à regarnir des sols et d'additifs destinés essentiellement à amender et/ou à traiter les sols ;
ledit dispositif comprenant :
a) un réservoir (1) destiné à contenir lesdites graines ou lesdits additifs ;
b) une unité pour le dosage sélectif (2,3,4) des graines ou des additifs en provenance dudit réservoir ;
c) des moyens (5,6) pour le transfert des graines ou des additifs en provenance de ladite unité de dosage, dans des sillons réalisés dans le sol au moyen d'une unité de scarification pourvue d'une pluralité de disques (7) ;
**caractérisé en ce que** l'unité de dosage sélectif des graines et des additifs en provenance du réservoir, comporte en combinaison
a) un rouleau de dosage sélectif (2) comportant, longitudinalement, une pluralité de zones successives (Z) subdivisées, chacune, en au moins deux zones (Z1) et (Z2) pourvues de moyens (2A), (2B) et (2C) adaptés pour doser les graines ou les additifs en fonction de leur granulométrie ;
b) un moyen (3) comportant une pluralité d'ouvertures (3A), séparées par des parties pleines (3B), adaptées pour faire communiquer, par le déplacement latéral dudit moyen (3), les graines ou additifs en provenance du réservoir (1), soit avec la zone (Z1), soit avec la zone (Z2) ;
c) un moyen (4) comportant une pluralité d'ouvertures (4A), séparées par des parties pleines (4B), adaptées pour obturer plus ou moins, par le déplacement latéral dudit moyen (4), les ouvertures (3A) du moyen (3).

2. Dispositif, selon la revendication 1, **caractérisé en ce que** le moyen (2A) est constitué de cannelures axiales (2A) disposées à la périphérie de toute la largeur de la zone (Z1).

3. Dispositif, selon la revendication 1, **caractérisé en ce que** le moyen (2B) est constitué de la paroi externe lisse, du rouleau (2), qui occupe une partie de la largeur de la zone (Z2) et **en ce qu'**au moins la partie dudit rouleau concernée par ladite paroi est réalisée en un matériau diélectrique chargé en particules électriques par le frottement, pendant la rotation du rouleau (2), d'un moyen (8), de type balai brosse.

4. Dispositif, selon l'une des revendications 1 et 3, **caractérisé en ce que** le moyen (2C) est constitué de lamages réalisés à la périphérie de la partie de la largeur de la zone (Z2) non occupée par le moyen (2B).

5. Dispositif, selon la revendication 1, **caractérisé en ce que** les moyens pour le transfert des graines ou des additifs en provenance de l'unité de dosage, dans les sillons réalisés dans le soi par l'unité de scarification, sont constitués d'un entonnoir (5) pourvu d'une canalisation (5A) reliée à un doigt semeur creux (6).

6. Dispositif, selon la revendication 5, **caractérisé en ce que** chaque doigt semeur creux (6) comporte un prolongateur creux coulissant dont la course est adaptée pour permettre à son extrémité basse de transférer les graines ou les additifs au plus près des sillons.

7. Dispositif, selon la revendication 5, **caractérisé en ce que** chaque doigt semeur creux (6) comporte un bras (9) adapté pour écarter le gazon de chaque côté des sillons.

8. Dispositif, selon la revendication 5, **caractérisé en ce que** chaque doigt semeur creux (6) comporte des tubes capillaires coulissants adaptés pour transférer des additifs liquides au plus près des sillons.

9. Dispositif, selon la revendication 8, **caractérisé en ce que** les tubes capillaires sont alimentés par des électrovannes asservies par un calculateur de débit et un distributeur par avancement.

10. Dispositif, selon la revendication 1, **caractérisé en ce que** la vitesse de rotation du rouleau distributeur (2) est asservie à la vitesse d'avancement de l'engin porteur et tracteur de l'ensemble des éléments constitutifs du dispositif de dosage sélectif.

11. Dispositif, selon l'une quelconque des revendications précédentes, **caractérisé en ce que** l'ensemble des éléments constitutifs du dispositif de dosage est relié à l'engin porteur et tracteur au moyen d'une suspension hydropneumatique.

## Claims

1. A device for the selective metering of seeds essentially intended for sowing and/or reseeding soils and additives essentially intended for improving and/or treating soils;
Said device comprising:
a) a reservoir (1) intended to contain said seeds or said additives;
b) a unit for the selective metering (2, 3, 4) of seeds or additives from said reservoir;
c) means (5, 6) to transfer seeds or additives from said metering unit, in furrows made in the soil by means of a scarification unit equipped with a plurality of disks (7);
**characterized in that** the selective metering unit for seeds and additives from the reservoir comprises in combination
a) a selective metering roll (2) comprising, longitudinally, a plurality of successive zones (Z), each subdivided into at least two zones (Z1) and (Z2) equipped with means (2A), (2B) and (2C) adapted to meter seeds or additives according to their particle size;
b) a means (3) comprising a plurality of openings (3A), separated by solid parts (3B), adapted to make the seeds or additives from the reservoir (1) communicate, by lateral displacement of said means (3), either with zone (Z1) or with zone (Z2);
c) a means (4) comprising a plurality of openings (4A), separated by solid parts (4B), adapted to more or less block off openings (3A) of means (3), by the lateral displacement of said means (4).

2. The device according to claim 1, **characterized in that** means (2A) is comprised of axial flutes (2A) disposed at the periphery of the entire width of zone (Z1).

3. The device, according to claim 1, **characterized in that** means (2B) is comprised of the smooth external casing of the roll (2), which occupies part of the width of zone (Z2) and **in that** at least the part of said roll affected by said casing is made of a dielectric material charged with electrical particles due to rubbing during rotation of the roll (2), of a scrub brush type means (8).

4. The device according to one of claims 1 and 3, **characterized in that** means (2C) is comprised of spot facings made on the periphery of part of the width of the zone (Z2) not occupied by means (2B).

5. The device according to claim 1, **characterized in that** the means for transferring seeds or additives from the metering unit are comprised of a funnel (5) equipped with a tube (5A) connected to a hollow sowing finger (6) in the furrows made in the soil by the scarification unit.

6. The device according to claim 5, **characterized in that** each hollow sowing finger (6) comprises a hollow sliding extension whose travel is adapted to allow seeds or additives at its lower extremity to be transferred as close as possible to the furrows.

7. The device according to claim 5, **characterized in that** each hollow sowing finger (6) comprises an arm (9) adapted to part the grass on both sides of the furrows.

8. The device according to claim 5, **characterized in that** each hollow sowing finger (8) comprises sliding capillary tubes adapted to transfer liquid additives as close as possible to the furrows.

9. The device according to claim 8, **characterized in that** the capillary tubes are supplied by solenoid valves controlled by a flow computer and a distributor by advancement.

10. The device according to claim 1, **characterized in that** the speed of rotation of the distribution roll (2) is controlled by the speed of advancement of the machine carrying and pulling the set of elements comprising the selective metering device.

11. The device according to any one of the previous claims, **characterized in that** the set of elements comprising the metering device is connected to the carrying and pulling machine by means of a hydropneumatic suspension.

## Patentansprüche

1. Vorrichtung für die selektive Dosierung von Körnern, die im Wesentlichen für die Einsaat und/oder das Auffrischen von Böden bestimmt sind, und von Zusätzen, die im Wesentlichen für die Düngung und/oder Behandlung der Böden bestimmt sind;
wobei die Vorrichtung umfasst:
a) einen Behälter (1), dafür bestimmt, die Körner oder Zusätze zu halten;
b) eine Einheit für die selektive Dosierung (2, 3, 4) der Körner oder der Zusätze aus dem Behälter;
c) Mittel (5, 6) für die Überführung der Körner oder der Zusätze aus der Dosiereinheit in Furchen, die im Boden mit einer Reisspflügeeinheit angebracht worden sind, die mit einer Mehrzahl von Scheiben (7) ausgerüstet ist;
**dadurch gekennzeichnet, dass** die Einheit für die selektive Dosierung der Körner und der Zusätze aus dem Behälter in Kombination aufweist:
a) eine Walze (2) für die selektive Dosierung, die längs eine Mehrzahl von aufeinanderfolgenden Zonen (Z) aufweist, die in mindestens je zwei Zonen (Z1) und (Z2) unterteilt sind, die mit Mitteln (2A), (2B) und (2C) ausgestattet sind, die dafür geeignet sind, die Körner bzw. die Zusätze in Abhängigkeit von ihrer Korngrösse zu dosieren;
b) ein Organ (3) mit einer Mehrzahl von Öffnungen (3A), die durch volle Abschnitte (3B) voneinander getrennt und dafür geeignet sind, durch die seitliche Verschiebung des Organs (3) die Körner oder Zusätze aus dem Behälter (1) entweder mit der Zone (Z1) oder mit der Zone (Z2) in Verbindung zu bringen;
c) ein Organ (4) mit einer Mehrzahl von Öffnungen (4A), die durch volle Abschnitte (4B) voneinander getrennt und dafür geeignet sind, durch die seitliche Verschiebung des Organs (4) die Öffnungen (3A) des Organs (3) mehr oder weniger zu verdecken.

2. Vorrichtung nach Anspruch 1, **dadurch gekennzeichnet, dass** die Mittel (2A) aus Axialrillen (2A) bestehen, die peripher über die gesamte Breite der Zone (Z1) angeordnet sind.

3. Vorrichtung nach Anspruch 1, **dadurch gekennzeichnet, dass** die Mittel (2B) aus der glatten Aussenwand der Walze (2) bestehen, die einen Teil der Breite der Zone (Z2) einnimmt, und dadurch, dass zumindest der Abschnitt der Walze, der mit der Wand zu tun hat, aus einem isolierenden Material besteht, das während der Drehung der Walze (2) durch die Reibung eines Organs (8) vom Typ einer Kehrbürste mit elektrischen Teilchen geladen wird.

4. Vorrichtung nach einem der Ansprüche 1 bis 3, **dadurch gekennzeichnet, dass** die Mittel (2C) aus Senkungen bestehen, die an der Peripherie des Abschnitts mit der Breite der Zone (Z2) angebracht sind, der nicht von den Mitteln (2B) eingenommen wird.

5. Vorrichtung nach Anspruch 1, **dadurch gekennzeichnet, dass** die Mittel für die Überführung der Körner oder Zusätze aus der Dosiereinheit in die Furchen, die im Boden durch die Reisspflügeeinheit angebracht worden sind, aus einem Trichter (5) bestehen, der mit einem Ablauf (5A) versehen ist, an den ein hohler Saatfinger (6) angeschlossen ist.

6. Vorrichtung nach Anspruch 5, **dadurch gekennzeichnet, dass** jeder hohle Saatfinger (6) eine hohle, gleitend angebrachte Verlängerung aufweist, deren Auslenkung so eingestellt ist, dass bei ihrer grössten Absenkung die Körner oder Zusätze so nahe wie möglich an die Furchen herangeführt werden.

7. Vorrichtung nach Anspruch 5, **dadurch gekennzeichnet, dass** jeder hohle Saatfinger (6) einen Arm (9) aufweist, der dafür geeignet ist, die Grasnarbe zu den beiden Seiten der Furchen wegzuspreizen.

8. Vorrichtung nach Anspruch 5, **dadurch gekennzeichnet, dass** jeder hohle Saatfinger (6) gleitend angebrachte Kapillarrohre aufweist, die dafür geeignet sind, flüssige Zusätze so nahe wie möglich an die Furchen heranzuführen.

9. Vorrichtung nach Anspruch 8, **dadurch gekennzeichnet, dass** die Kapillarrohre durch Magnetventile versorgt werden, die durch einen Durchflussrechner und einen Vorschubverteiler gesteuert werden.

10. Vorrichtung nach Anspruch 1, **dadurch gekennzeichnet, dass** die Drehzahl der Verteilwalze (2) durch die Vorschubgeschwindigkeit des Geräteträgers und Schleppers der Gesamtheit der Bauelemente der Vorrichtung für die selektive Dosierung gesteuert wird.

11. Vorrichtung nach einem der vorangehenden Ansprüche, **dadurch gekennzeichnet, dass** die Gesamtheit der Bauelemente der Vorrichtung für die selektive Dosierung mittels einer luftpneumatischen Aufhängung mit dem Geräteträger und Schlepper verbunden ist.
